# EUROPÄISCHE PATENTSCHRIFT

(11) **EP 1 248 173 B1**
(45) Veröffentlichungstag und Bekanntmachung des Hinweises auf die Patenterteilung: **12.05.2004**
(21) Anmeldenummer: 02004450.9
(22) Anmeldetag: 27.02.2002
(51) Int. Cl.: G05D 23/12, F16K 31/00, G05D 23/13

(54) **Thermostatisch gesteuertes Mischventil**
Thermostatic mixer device
Mélangeur thermostatique

(30) Priorität: 22.03.2001 DE 10114357
(43) Veröffentlichungstag der Anmeldung: 09.10.2002
(73) Patentinhaber: Hansgrohe AG, 77761 Schiltach (DE)
(72) Erfinder: Heinzelmann, Werner, 72275 Alpirsbach (DE)
(74) Vertreter: Schöndorf, Jürgen

(56) Entgegenhaltungen:
- DE-A- 3 239 772
- US-A- 4 760 953
- US-A- 5 927 597

## Beschreibung

Die Erfindung geht aus von einem thermostatisch gesteuerten Mischventil. Mischventile dieser Art haben einen Einlass für kaltes Wasser und einen Einlass für warmes Wasser. Das Mischungsverhältnis zwischen dem warmen Wasser und dem kalten Wasser wird durch einen Ventilkörper in Form einer Steuerbüchse hergestellt, die in einer Steuerhülse angeordnet ist. Der Temperatur des Mischwassers ist ein Ausdehnungselement ausgesetzt, das die Steuerbüchse axial bewegt. Diese verändert bei der Bewegung das Verhältnis des Querschnitts der Steueröffnung für das warme zu dem kalten Wasser.

Auf Grund des zur Verfügung stehenden Raumes und der üblichen Temperaturen, sowie des für das Ausdehnungselement verwendeten Materials, liegt die Schlitzbreite des Schlitzes zwischen der Steuerbüchse und dem zugeordneten Ventilsitz im Größenbereich von 0,4 mm bis 0,8 mm. Dies führt, wenn man einen bestimmten Strömungsquerschnitt fordert, zu einem sich daraus ableitenden Durchmesser der Steuerbüchse, der relativ groß ist.

Bei allen bekannten thermostatisch gesteuerten Mischventilen dieser Art gibt es sowohl für das kalte als auch für das warme Wasser eine einzige von dem Ventilkörper gesteuerte Einlassöffnung (EP-A-0187378, US-A-4,760,953, US-A-5,927,597).

Der Erfindung liegt die Aufgabe zu Grunde, ein thermostatisch gesteuertes Mischventil zu schaffen, das auch bei sehr geringem Platzbedarf große Strömungsquerschnitte der Steueröffnungen ermöglicht.

Zur Lösung dieser Aufgabe schlägt die Erfindung ein Mischventil mit den im Anspruch 1 genannten Merkmalen vor. Weiterbildungen der Erfindung sind Gegenstand von Unteransprüchen, deren Wortlaut ebenso wie der Wortlaut der Zusammenfassung durch Bezugnahme zum Inhalt der Beschreibung gemacht wird.

Das von der Erfindung vorgeschlagene Mischventil verwendet also einen Ventilkörper, der mindestens auf einer Seite mindestens 2 Steueröffnungen für das einströmende Wasser aufweist. Auf der anderen Seite, d. h. der Seite mit der höheren oder tieferen Temperatur, kann erfindungsgemäß mindestens 1 Steueröffnung vorhanden sein, vorzugsweise aber auch 2 Steueröffnungen.

Durch die Maßnahmen der Erfindung wird es möglich, mit dem gleichen Hub dann jeweils zwei Steueröffnungen zu öffnen bzw. zu schließen. Es wird dadurch möglich, den Strömungsquerschnitt der Steueröffnungen im geöffneten Zustand praktisch zu verdoppeln. Bei der Anordnung von mehr als zwei Steueröffnungen auf jeder Seite kann der Strömungsquerschnitt auch noch weiter gesteigert werden. Diese Vergrößerung des Strömungsquerschnitts bei ungeänderter Größe des Hubes kann dazu ausgenutzt werden, den Durchmesser des Ventilkörpers und damit die Größe der Armatur zu verkleinern. Es kann ausreichen, wenn nur an einer Seite des Ventils, beispielsweise der Warmwasserseite, zwei Steueröffnungen vorhanden sind.

Besonders günstig ist es jedoch, wenn auf beiden Seiten des Ventils mindestens zwei Steueröffnungen vorhanden sind.

In Weiterbildung der Erfindung kann vorgesehen sein, dass jede Steueröffnung durch einen bewegbaren Abschnitt des Ventilkörpers und einen nicht bewegbaren Teil des Mischventils gebildet wird, insbesondere durch einen Teil des Gehäuses.

Insbesondere kann in Weiterbildung der Erfindung vorgesehen sein, dass mindestens eine Steueröffnung zwischen einem Schlitz des Ventilkörpers und einer Kante des Gehäuses des Mischventils gebildet wird. Durch Verschieben des Schlitzes gegenüber der Kante des Gehäuses wird dann der Strömungsquerschnitt der Steueröffnungen vergrößert oder verkleinert.

Es kann ebenfalls vorgesehen sein und wird von der Erfindung vorgeschlagen, dass mindestens eine Steueröffnung zwischen zwei Steuerflächen gebildet wird, wobei die Bewegungsrichtung des Ventilkörpers etwa senkrecht zu mindestens einer Steuerfläche verläuft.

In nochmaliger Weiterbildung der Erfindung kann vorgesehen sein, dass an dem Gehäuse ein Ventilsitz angeordnet ist, der zusammen mit dem Ventilkörper eine Steueröffnung bildet.

Auch bei dem von der Erfindung vorgeschlagenen thermostatisch gesteuerten Mischventil kann als Ventilkörper eine Steuerbüchse verwendet werden.

Erfindungsgemäß kann vorgesehen sein, dass mindestens eine Stirnfläche Ventilkörpers mit einer einen Ventilsitz, bildenden Steuerfläche zur Bildung einer Steueröffnung zusammen wirkt.

Es kann vorgesehen sein, dass mindestens zwei Steueröffnungen in der Bewegungsrichtung des Ventilkörpers einen Abstand voneinander aufweisen. Insbesondere dann, wenn der Ventilkörper axial bewegt wird, wird auf diese Weise dafür gesorgt, dass das einströmende Wasser über eine in axialer Richtung relativ große Fläche eindringen kann.

In Weiterbildung der Erfindung kann vorgesehen sein, dass mindestens eine Steuerfläche eine elastisch ausgebildete Oberfläche aufweist. Da die Steueröffnungen simultan geschlossen werden, kann dies zum Ausgleich von fertigungsbedingten Toleranzen dienen. Es kann vorgesehen sein, dass die elastisch ausgebildete Oberfläche von einer Einlage bzw. Auflage aus einem elastischen Material gebildet wird, insbesondere aus einem Elastomermaterial. Es kann auch vorgesehen sein, dass mindestens 1 Sitz gefedert ist.

Weitere Merkmale, Einzelheiten und Vorzüge des Erfindung ergeben sich aus der folgenden Beschreibung bevorzugter Ausführungsformen der Erfindung, den Patentansprüchen, deren Wortlaut durch Bezugnahme zum Inhalt der Beschreibung gemacht wird, sowie der Zeichnung. Hierbei zeigen:
- Fig. 1:: einen mit einem Thermostaten versehenen Ventileinsatz;
- Fig. 2:: in vergrößertem Maßstab einen Ausschnitt aus dem Thermostatventil;
- Fig. 3:: einen der Figur 2 entsprechenden Ausschnitt bei einer geänderten Ausführungsform;
- Fig. 4:: stark vereinfacht die Anordnung bei einer weiteren Ausführungsform.

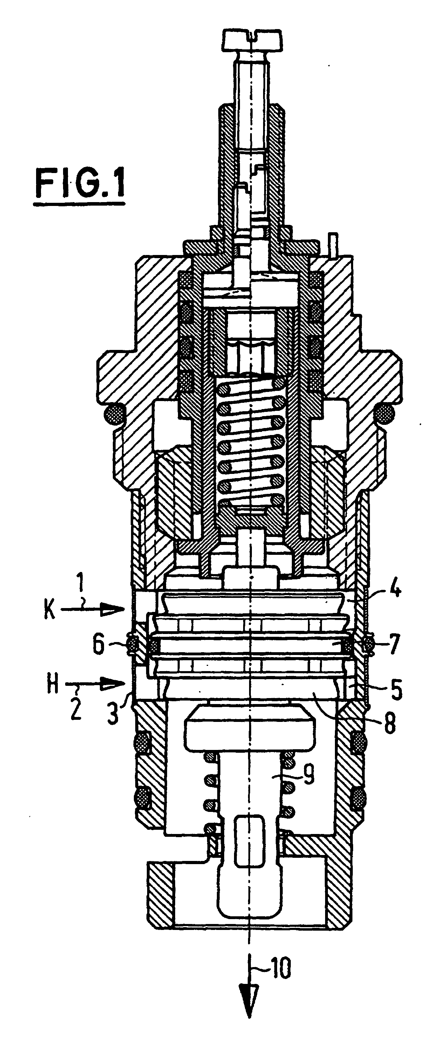

Die Figur 1 zeigt in einem Axialschnitt den Aufbau eines Ventileinsatzes mit einem thermostatisch gesteuerten Mischventil. Der Aufbau entspricht im Wesentlichen dem Aufbau herkömmlicher Thermostatventile. Es gibt einen Einlass 1 für kaltes Wasser und einen Einlass 2 für heißes Wasser. Beide Einlässe sind durch ein Sieb 3 gesichert. Das heiße und das kalte Wasser gelangen in je einen Ringraum 4, 5, die durch eine Dichtung 6 gegeneinander abgedichtet sind. Die Dichtung 6 sitzt in einer Umfangsnut 7 eines Ventilkörpers 8. Der Ventilkörper 8 ist mit einem Ausdehnungselement 9 mechanisch verbunden, das den Ventilkörper 8 in axialer Richtung verschieben kann, je nach der Temperatur des Ausdehnungselements 9. Das Ausdehnungselement 9 ist so angeordnet, dass es der Temperatur des Mischwassers ausgesetzt ist. Das Mischwasser verlässt das Ventil in Richtung des Pfeiles 10.

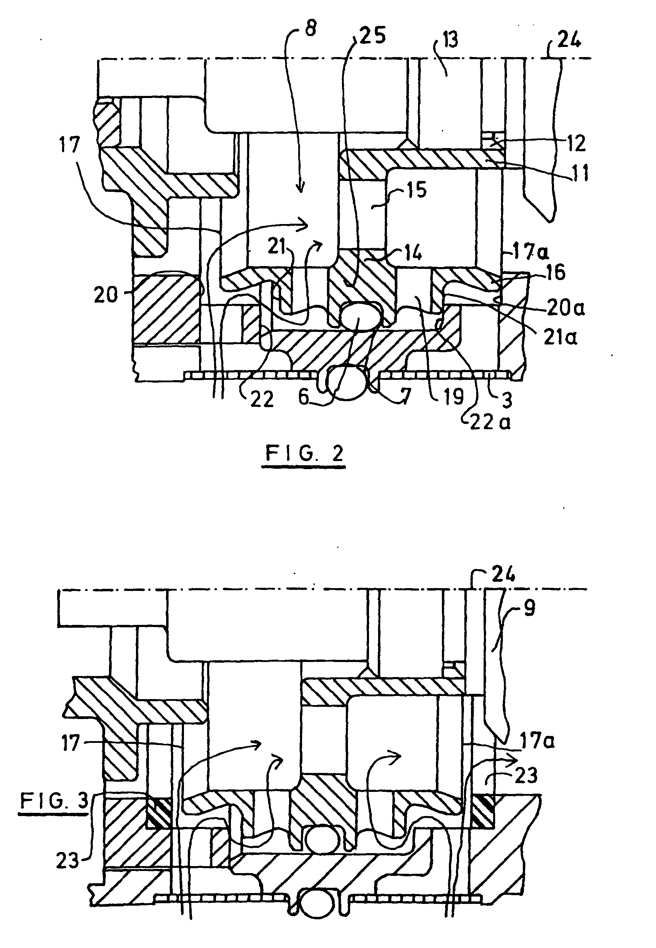

Die Wirkungsweise der Erfindung wird nun an Hand der Figur 2 erläutert. Der Ventilkörper 8 ist als Steuerbüchse ausgebildet. Sie besitzt in der Mitte einen zylindrischen Abschnitt 11, in dessen Innengewinde 12 ein von dem Ausdehnungselement bewegbarer Kolben 13 eingeschraubt ist. Dadurch wird bei Axialbewegung des Kolbens 13 die Steuerbüchse axial mitbewegt. Der zylindrische Abschnitt 11 ist an einer Scheibe 14 angeordnet, die axiale Durchbrüche 15 aufweist. Der äußere Abschnitt 16 der Steuerbüchse enthält zwei Stimkanten 17, 17a. Zwischen den Stimkanten 17, 17a und der mittig angeordneten Scheibe 14 ist eine Reihe von radialen Durchbrüchen 19 vorhanden, die sich in Umfangsrichtung über einen bestimmten Bogen erstrecken. An der Außenseite der Steuerbüchse ist etwa mittig die bereits erwähnte Umfangsnut 7 mit der darin angeordneten Dichtung 6 vorhanden.

Jeder Stimkante 17, 17a gegenüberliegend ist eine Ringfläche 20, 20a gebildet, die in einer Ebene liegt. Diese Ringflächen 20, 20a begrenzen zusammen mit der jeweiligen Stimkante 17, 17a der Steuerbüchse eine Steueröffnung, die die Form eines Umfangschlitzes aufweist. Wird die Steuerbüchse in Figur 2 nach links bewegt, so verringert sich die Breite des Schlitzes zwischen der Ringfläche 20 und der Stirnkante 17, während auf der gegenüberliegenden Seite sich der Abstand zwischen der Ringfläche 20a und der Stirnkante 17a vergrößert. Die Ringfläche 20, 20a an der die Stimkante 17 bzw. 17a zur Anlage gelangt, bildet einen Ventilsitz.

In axialer Richtung ist zwischen den beiden Stirnkanten 17, 17a der Steuerbüchse und den Durchbrechungen 19 ebenfalls eine quer zur Axialrichtung verlaufende nach außen gerichtete Fläche 21, 21 a vorhanden, die ebenfalls eine Ringfläche bildet. Diesen Ringflächen gegenüberliegend sind Ventilsitzflächen 22, 22a vorhanden, die zusammen mit den Ringflächen 21 eine weitere Steueröffnung auf jeder Seite des Ventils bilden. Der axiale Abstand zwischen den Ringflächen 20 und den zugeordneten Stirnkanten 17 bzw. 17a entspricht exakt dem axialen Abstand zwischen den Ventilsitzflächen 22, 22a und den Ringflächen 21, 21a. Daher ist rechts in Figur 2 eine Anlage sowohl der Stimkante 17a an der Fläche 20a als auch der Fläche 21 a an der Fläche 22a gegeben. Links in Figur 2 kann das Wasser in Richtung der Pfeile in das Innere der Steuerbüchse strömen und von dort aus nach rechts in den Raum, in dem das Ausdehnungselement 9 angeordnet ist.

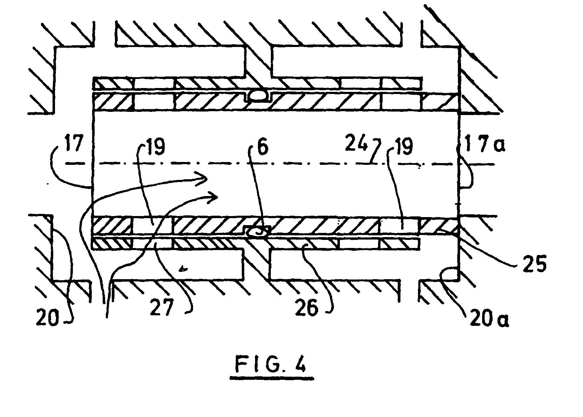

Wie bereits erwähnt, muss für eine korrekte Funktion des Ven-tils der Abstand zwischen der Stimkante 17 und der zugeordneten Ventilsitzfläche 20 gleich dem Abstand zwischen den entsprechenden Flächen 21 und 22 sein. Um fertigungsbedingte Toleranzen ausgleichen zu können oder anders ausgedrückt es möglich zu machen, mit Toleranzen leben zu können, schlägt die Erfindung nun vor, die beiden Ventilsitzflächen 20, 20a die mit den Stimkanten 17 bzw. 17a zusammenwirken, mit einer nachgiebigen Oberfläche zu versehen. Dies geschieht im dargestellten Beispiel in Figur 3 dadurch, dass ein Ring 23 aus Elastomermaterial in eine entsprechende Einkerbung eingelegt wird. Da auf jeder Seite des Ventilkörpers, das heißt auf der kalten und auf der warmen Seite, zwei Steueröffnungen ge-schlossen und geöffnet werden, ist es sinnvoll, einen solchen Ring 23 nur an einer Ventilsitzfläche anzuordnen. Wären drei Steueröffnungen auf jeder Seite vorhanden, würde man bei zwei Ventilsitzflächen solche Ringe 23 aus Elastomermaterial verwenden.

Nun zu der stark vereinfachten Darstellung der Ausführungsform in Figur 4. Auch hier ist wieder nur eine Hälfte der Anordnung gezeichnet, nämlich die Hälfte unterhalb der Längsachse 24. Die Steuerbüchse 25 ist vereinfacht nur als Hülse dargestellt, die also wiederum zwei Stirnkanten 17, 17a und radiale Durchbrechungen 19 aufweist. Der Steuerbüchse 25 gegenüberliegend, das heißt sie außen umgreifend, ist eine zylindrische Wand des Gehäuses vorhanden, die ebenfalls radiale Durchbrechungen 27 aufweist. Links in Figur 4 ist eine Übereinstimmung der Durchbrechungen 19 der Steuerbüchse und der Durchbrechungen 27 des Gehäuses gegeben. Das Wasser kann also in Richtung der Pfeile einmal um die Stirnkante 17 der Steuerbüchse 25 herum und zum anderen durch die über-einstimmenden radialen Schlitze 19, 27 hindurch in das Innere der Steuerbüchse 25 fließen. Von dort kann das Wasser zum Auslass gelangen, siehe in Figur 1 den Pfeil 10. An der rechten Seite in Figur 4 ist die zwischen der Stimkante 17a und dem Gehäuse gebildete Steueröffnung geschlossen, ebenso die zweite durch die Durchbrechungen 19, 27 gebildete Steueröffnung. Wird nun die Steuerbüchse 25 in Figur 4 nach links verschoben, so schließen sich simultan die beiden Steueröffnungen an der linken Seite, während sich die an der rechten Seite öffnen. Ohne Vergrößerung des Hubs wird eine Verdopplung des Strömungsquerschnitts der Steueröffnungen erreicht. Was in Figur 4 schematisch für zwei Steueröffnungen auf jeder Seite des Ventils dargestellt ist, ließe sich auch für mehrere Steueröffnungen darstellen und verwirklichen.

## Patentansprüche

1. Thermostatisch gesteuertes Mischventil für eine Sanitärarmatur, mit
1.1 einem der Temperatur des Mischwassers ausgesetzten Ausdehnungselement (9) und
1.2 einem von dem Ausdehnungselement (9) bewegbaren Ventilkörper (8) zum Öffnen und Schließen von Steueröffnungen,
**dadurch gekennzeichnet, dass**
1.3 der Ventilkörper (8) bei seiner Bewegung
1.3.1 mindestens zwei Steueröffnungen für das einströmende kalte Wasser und/oder
1.3.2 mindestens zwei Steueröffnungen für das warme Wasser steuert.

2. Mischventil nach Anspruch 1, bei dem jede Steueröffnung durch einen bewegbaren Abschnitt des Ventilkörpers (8) bzw. einen Abschnitt des bewegbaren Venitlkörpers (8) und einen nicht bewegbaren Teil des Mischventils, insbesondere des Gehäuses, gebildet wird.

3. Mischventil nach Anspruch 1 oder 2, bei dem mindestens eine Steueröffnung zwischen einem Schlitz des Ventilkörpers (8) und einer Kante des Gehäuses des Mischventils gebildet wird.

4. Mischventil nach einem der vorhergehenden Ansprüche, bei dem mindestens eine Steueröffnung zwischen zwei gegebenenfalls schmalen Steuerflächen (20, 21, 22) gebildet wird, wobei die Bewegungsrichtung des Ventilkörpers (8) etwa senkrecht zu mindestens einer Steuerfläche (20, 21, 22) verläuft.

5. Mischventil nach einem der vorhergehenden Ansprüche, bei dem mindestens eine Steueröffnung zwischen einem Ventilsitz des Gehäuses und dem Ventilkörper (8) gebildet wird.

6. Mischventil nach einem der vorhergehenden Ansprüche, bei dem der Ventilkörper (8) als eine Steuerbüchse (25) ausgebildet ist aufweist.

7. Mischventil nach einem der vorhergehenden Ansprüche, bei dem mindestens eine Stirnfläche (17, 17a) des Ventilkörpers (8) mit einem durch eine Fläche oder Kante gebildeten Ventilsitz zur Bildung einer Steueröffnung zusammenwirkt.

8. Mischventil nach einem der vorhergehenden Ansprüche, bei dem mindestens zwei Steueröffnungen in Bewegungsrichtung des Ventilkörpers (8) einen Abstand voneinander aufweisen.

9. Mischventil nach einem der vorhergehenden Ansprüche, bei dem mindestens ein Ventilsitz von einer insbesondere ebenen Ringfläche (20) des Gehäuses gebildet wird.

10. Mischventil nach einem der vorhergehenden Ansprüche, bei dem mindestens zwei Steueröffnungen in einer Richtung quer zur Bewegungsrichtung des Ventilkörpers (8) einen Abstand voneinander aufweisen.

11. Mischventil nach einem der vorhergehenden Ansprüche, bei dem mindestens eine Steuerfläche eine elastisch ausgebildete Oberfläche aufweist.

12. Mischventil nach Anspruch 11, bei dem die elastisch ausgebildete Oberfläche von einer Einlage bzw. Auflage (23) aus elastischem Material, insbesondere Elastomermaterial, gebildet wird.

13. Mischventil nach einem der vorhergehenden Ansprüche, bei dem mindestens eine Steuerfläche beweglich gelagert ist.

14. Mischventil nach einem der vorhergehenden Ansprüche, bei dem mindestens eine Steuerfläche gefedert gelagert ist.

## Claims

1. A thermostatically controlled mixer valve for a plumbing fixture having
1.1 an expanding element (9) subjected to the temperature of the mixed water and
1.2 a valve body (8) that may be moved by the expanding element (9) in order to open and close control apertures,
wherein
1.3 when moved, the valve body (8) controls
1.3.1 at least two control apertures for entering cold water and/or
1.3.2 at least two control apertures for hot water.

2. A mixer valve according to claim 1, wherein every control aperture is formed by a mobile section of the valve body (8) or a section of the mobile valve body (8) and an immobile portion of the mixer valve, in particular, its housing.

3. A mixer valve according to claim 1 or claim 2, wherein at least one control aperture is formed between a slot in the valve body (8) and an edge of the housing of the mixer valve.

4. A mixer valve according to any of the foregoing claims, wherein at least one control aperture is formed between two control surfaces (20, 21, 22), which may be narrow, where the direction of motion of the valve body (8) is approximately normal to at least one control surface (20, 21, 22).

5. A mixer valve according to any of the foregoing claims, wherein at least one control aperture is formed between a valve seat of the housing and the valve body (8).

6. A mixer valve according to any of the foregoing claims, wherein the valve body (8) is configured as a control sleeve (25).

7. A mixer valve according to any of the foregoing claims, wherein at least one end face (17, 17a) of the valve body (8) and a valve seat formed by a surface or an edge interact to form a control aperture.

8. A mixer valve according to any of the foregoing claims, wherein at least two control apertures are separated from one another along the direction of motion of the valve body (8).

9. A mixer valve according to any of the foregoing claims, wherein at least one valve seat is formed by an annular surface, in particular, a planar annular surface (20), of the housing.

10. A mixer valve according to any of the foregoing claims, wherein at least two control apertures are separated from one another normal to the direction of motion of the valve body (8).

11. A mixer valve according to any of the foregoing claims, wherein at least one control surface has an elastic surface.

12. A mixer valve according to claim 11, wherein the elastic surface is formed by an insert or a washer (23) fabricated from an elastic material, in particular, an elastomeric material.

13. A mixer valve according to any of the foregoing claims, wherein at least one control surface is mobile.

14. A mixer valve according to any of the foregoing claims, wherein at least one control surface is spring loaded.

## Revendications

1. Mélangeur thermostatique pour une armature sanitaire, avec
1.1 un élément de dilatation (9) soumis à la température de l'eau mélangée et
1.2 une soupape (8) pouvant être déplacée par l'élément de dilatation (9) pour ouvrir et fermer des ouvertures de commande, **caractérisé en ce que**
1.3 la soupape (8) commande, lors de son mouvement,
1.3.1 au moins deux ouvertures de commande pour l'eau froide arrivant et/ou
1.3.2 au moins deux ouvertures de commande pour l'eau chaude.

2. Mélangeur selon la revendication 1, sur lequel chaque ouverture de commande est formée par une partie mobile de la soupape (8) ou une partie de la soupape mobile (8) et une partie non mobile du mélangeur, en particulier du boîtier.

3. Mélangeur selon la revendication 1 ou 2, sur lequel au moins une ouverture de commande est formée entre une fente de la soupape (8) et un bord du boîtier du mélangeur.

4. Mélangeur selon l'une des revendications précédentes, sur lequel au moins une ouverture de commande est formée entre deux surfaces de commande éventuellement petites (20, 21, 22), la direction de déplacement de la soupape (8) étant approximativement verticale par rapport à au moins une surface de commande (20, 21, 22).

5. Mélangeur selon l'une des revendications précédentes, sur lequel au moins une ouverture de commande est formée entre un logement de soupape du boîtier et la soupape (8).

6. Mélangeur selon l'une des revendications précédentes, sur lequel la soupape (8) constitue une douille de commande (25).

7. Mélangeur selon l'une des revendications précédentes, sur lequel au moins une surface frontale (17, 17) de la soupape (8) agit avec un logement de soupape formé par une surface ou un bord pour créer une ouverture de commande.

8. Mélangeur selon l'une des revendications précédentes, sur lequel au moins deux ouvertures de commande présentent, dans la direction de déplacement de la soupape (8), un écart entre elles.

9. Mélangeur selon l'une des revendications précédentes, sur lequel au moins un logement de soupape est formé, en particulier, par une surface annulaire plane (20) du boîtier.

10. Mélangeur selon l'une des revendications précédentes, sur lequel au moins deux ouvertures de commande présentent, dans une direction transversale à la direction de déplacement de la soupape (8), un écart entre elles.

11. Mélangeur selon l'une des revendications précédentes, sur lequel au moins une surface de commande présente une surface élastique.

12. Mélangeur selon la revendication 11, sur lequel la surface élastique est formée par un insert ou une garniture (23) en matériau élastique, en particulier en matériau élastomère.

13. Mélangeur selon l'une des revendications précédentes, sur lequel au moins une surface de commande est logée de façon mobile.

14. Mélangeur selon l'une des revendications précédentes, sur lequel au moins une surface de commande est logée sur ressort.
